# EUROPEAN PATENT APPLICATION

(11) **EP 1 798 303 A2**
(43) Date of publication of application: **20.06.2007**
(21) Application number: 06125984.2
(22) Date of filing: 13.12.2006
(51) Int. Cl.: C23C 10/08, C23C 28/00, C23C 30/00, F01D 5/28

(54) **Method for depositing an aluminium-containing layer onto an article**

(30) Priority: 14.12.2005 US 302657
(71) Applicant: General Electric Company, Schenectady, NY 12345 (US)
(72) Inventor: Wortman, David John, Hamilton, OH 45011 (US); Saylor, Matthew David, Blanchester, OH 45107 (US)
(74) Representative: Bedford, Grant Richard

(57) **Abstract**

A method for preparing a protected article (40) includes the steps of furnishing an article (40) to be protected, wherein the article (40) is a component of a gas turbine engine, thereafter depositing a precious-metal-containing layer (60) onto the article (40), and thereafter depositing an aluminum-containing layer (62) by vapor-phase aluminiding onto the article (40) overlying the precious-metal-containing layer (60) from an aluminum vapor source that includes a fluoride. The method further includes thereafter heating the article (40) with the aluminum-containing layer (62) deposited thereon in an atmosphere having at least 5 percent by volume hydrogen gas, and thereafter depositing a ceramic layer (64) overlying the aluminum-containing layer (62).

## Description

This invention relates generally to the protection of a metallic article by an aluminum-containing layer, and more particularly to improving the quality of the aluminum-containing layer by the removal of harmful constituents.

In an aircraft gas turbine (jet) engine, air is drawn into the front of the engine, compressed by a shaft-mounted compressor, and mixed with fuel. The mixture is burned, and the hot combustion gases are passed through a turbine mounted on the same shaft. The flow of combustion gas turns the turbine by impingement against airfoil sections of the turbine blades and vanes, which turns the shaft and provides power to the compressor and fan. In a more complex version of the gas turbine engine, the compressor and a high pressure turbine are mounted on one shaft, and the fan and low pressure turbine are mounted on a separate shaft. The hot exhaust gases flow from the back of the engine, driving it and the aircraft forward.

The hotter the combustion and exhaust gases, the more efficient is the operation of the jet engine. There is thus an incentive to raise the combustion and exhaust-gas temperatures. The maximum temperature of the combustion gases is normally limited by the materials used to fabricate the turbine vanes and turbine blades of the turbine, upon which the hot combustion gases impinge. In current engines, the turbine vanes and blades are made of nickel-based superalloys, and can operate at temperatures of up to about 1900-2150°F.

Many approaches have been used to increase the operating temperature limits of turbine blades, turbine vanes, and other hot-section components to their current levels. For example, the composition and processing of the base materials themselves have been improved, and a variety of solidification techniques have been developed to take advantage of oriented grain structures and single-crystal structures. Physical cooling techniques may also be used.

In yet another approach, coatings are applied to the surface of the substrate to inhibit the oxidation and corrosion of the substrate, thereby permitting the substrate material to be used for a longer time and at a higher temperature than would otherwise be possible. The most widely used coatings are aluminum-rich layers whose surfaces oxidize to an aluminum oxide scale to inhibit further oxidation and corrosion. The aluminum-rich layer may serve as either an environmental coating or as a bond coat under a ceramic thermal barrier coating. The ceramic thermal barrier coating, where present, insulates the surface of the substrate against the hot combustion gases.

Protective layers continue to be used to protect substrates. However, in some instances there has been a tendency for the protective layers to separate and spall away from the substrate prematurely, leaving the substrate unprotected. There is a need to understand the origin of this spallation and to correct it. The present invention fulfills this need, and further provides related advantages.

The present approach reduces the tendency toward separation and spallation of protective layers deposited by one of the commercially most-important deposition techniques. A new process step is added, but this process step modifies the chemistry of the protective coating so that spallation of the thermal barrier coating is greatly reduced.

In accordance with various embodiments of the invention, a method for preparing a protected article comprises the steps of furnishing an article to be protected, thereafter depositing an aluminum-containing layer onto the article from an aluminum vapor source that includes a fluoride, and thereafter heating the article with the aluminum-containing layer deposited thereon in an atmosphere comprising at least about 5 percent, more preferably at least about 50 percent, and most preferably 100 percent by volume hydrogen gas. The heating step is preferably performed for a time of from about 1/4 hour to about 8 hours, and at a temperature of from about 1800°F to about 2050°F. Preferably, a ceramic layer is deposited overlying the aluminum-containing layer after the step of heating.

The article is preferably a component of a gas turbine engine. More preferably, the article is a component of a gas turbine engine having an airfoil, and the aluminum-containing layer is deposited onto the airfoil.

The aluminum-containing layer is preferably deposited by vapor-phase aluminiding, and from an aluminum-containing vapor. The aluminum-containing vapor may be generated by an aluminum source comprising aluminum-containing donor pellets, such as aluminum or aluminum-chromium alloy pellets, and a fluoride-containing solid.

In another embodiment, a precious-metal-containing layer is deposited onto the article after the step of furnishing and prior to the step of depositing the aluminum-containing layer. The aluminum-containing layer is thereafter deposited overlying the precious-metal-containing layer. The precious-metal-containing layer may be deposited by electrodeposition, and then interdiffused with the substrate prior to the deposition of the aluminum-containing layer. The precious metal is preferably platinum.

In a preferred form, a method for preparing a protected article comprises the steps of furnishing an article to be protected, wherein the article is a component of a gas turbine engine, thereafter depositing a precious-metal-containing layer onto the article, and thereafter depositing an aluminum-containing layer by vapor-phase aluminiding onto the article overlying the precious-metal-containing layer from an aluminum vapor source that includes a fluoride. The method further includes thereafter heating the article with the aluminum-containing layer deposited thereon in an atmosphere comprising at least 5 percent, more preferably at least 50 percent, and most preferably 100 percent by volume hydrogen gas, and thereafter depositing a ceramic layer overlying the aluminum-containing layer. Other compatible features discussed herein may be used with this embodiment.

The spallation of the thermal barrier coating observed in prior processing is associated with the presence of fluorides remaining in the coated structure following the deposition of the aluminum-containing layer. These fluorides originate in the fluoride activator, such as aluminum trifluoride, that is used in the vapor-phase aluminiding process. The post-deposition hydrogen heat treatment reacts the fluorides in the coated structure with hydrogen, producing hydrogen fluoride gas that is removed. Comparative testing has shown that airfoils given the post-deposition hydrogen heat treatment have a much lower incidence of spallation than comparable airfoils that were not given the post-deposition hydrogen heat treatment. The hydrogen heat treatment also desirably interdiffuses the deposited aluminum-containing layer with the substrate and the underlying precious-metal-containing layer, if any.

Other features and advantages of the present invention will be apparent from the following more detailed description of the preferred embodiment, taken in conjunction with the accompanying drawings, in which:
Figure 1 is a block flow diagram of an approach for practicing various embodiments of the invention;
Figure 2 is a perspective view of an article that may be processed by the approach of Figure 1; and
Figure 3 is an enlarged schematic sectional view of the article of Figure 2, taken along line 3-3.

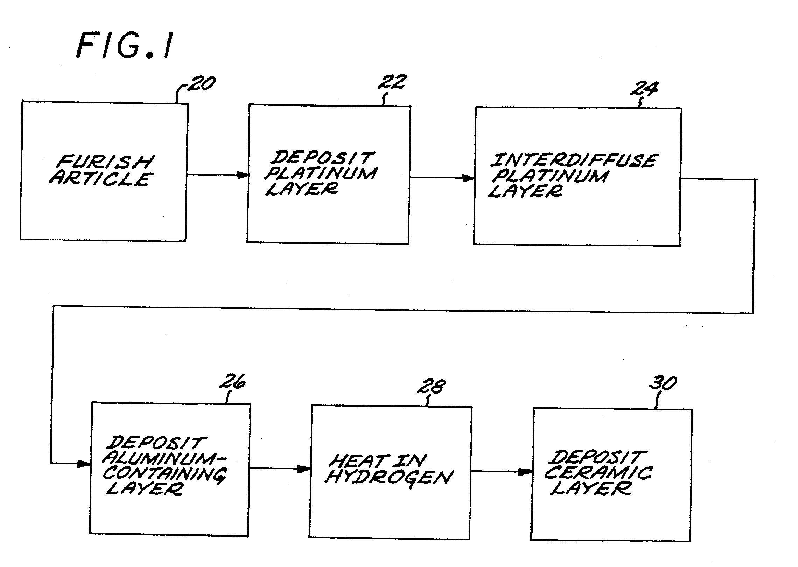

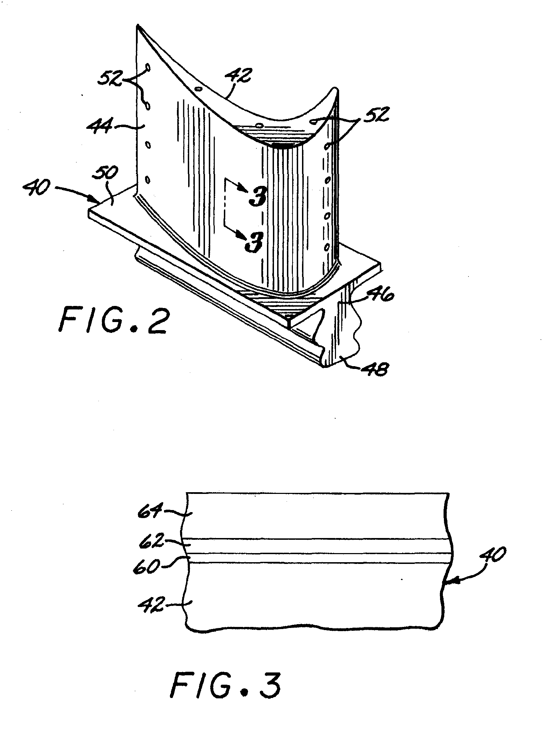

Figure 1 depicts a method for preparing a protected article, and Figure 2 shows an example of an article 40. Referring to Figure 1, the article 40 is furnished, step 20. Figure 2 depicts an example of such an article 40, in this case a gas turbine blade 42. The gas turbine blade 42 has an airfoil 44 against which the flow of hot combustion gas impinges during service operation, a downwardly extending shank 46, and an attachment in the form of a dovetail 48, which attaches the gas turbine blade 42 to a gas turbine disk (not shown) of the gas turbine engine. A platform 50 extends transversely outwardly at a location between the airfoil 44 and the shank 46.

Optionally, the gas turbine blade 42 may be partially hollow, so that a flow of cooling gas may be passed through the interior of the gas turbine blade 42 during service to cool it. The flow of cooling gas leaves the interior of the gas turbine blade 42 through openings 52 in the airfoil 44 of the gas turbine blade 42.

The entire gas turbine blade 42 is preferably made of a nickel-base superalloy. A nickel-base alloy has more nickel than any other element, and a nickel-base superalloy is a nickel-base alloy that is strengthened by the precipitation of gamma-prime phase or a related phase. An example of a nickel-base superalloy with which the present invention may be used is Rene^{™} N5, having a nominal composition in weight percent of about 7.5 percent cobalt, about 7.0 percent chromium, about 1.5 percent molybdenum, about 5 percent tungsten, about 3 percent rhenium, about 6.5 percent tantalum, about 6.2 percent aluminum, about 0.15 percent hafnium, about 0.05 percent carbon, about 0.004 percent boron, about 0.01 percent yttrium, balance nickel and minor elements.

As shown in the sectional view of Figure 3, a precious-metal-containing layer 60 is thereafter deposited onto the article 40, step 22 of Figure 1. In the illustrated embodiment, the precious metal is preferably deposited directly upon the airfoil 44 of the gas turbine blade 42. The precious metal is preferably platinum. The platinum deposition step 22 is preferably accomplished by placing a platinum-containing solution into a deposition tank and electrodepositing platinum from the solution onto the airfoil 44 of the article 40. An operable platinum-containing aqueous solution is Pt(NH₃)₄HPO₄ having a concentration of about 4-20 grams per liter of platinum, and the voltage/current source is operated at about 1/2-10 amperes per square foot of facing article surface. The platinum-containing layer 60, which is preferably from about 1 to about 6 micrometers thick and most preferably about 5 micrometers thick, is deposited in 1-4 hours at a temperature of 190-200°F.

Optionally but preferably, the precious-metal-containing layer 60 is thereafter interdiffused with the underlying substrate of the article 40, step 24 of Figure 1, by heating the article and the precious-metal-containing layer 60 to a sufficiently high temperature and for a sufficiently long time, in vacuum. An operable interdiffusion heat treatment 24 is 2 hours at a temperature of 1700°F.

An aluminum-containing layer 62 is deposited overlying and contacting the surface of the article 40, which includes the precious-metal-containing layer 60 (if present), step 26 of Figure 1. A preferred deposition technique is vapor phase aluminiding (VPA). In one embodiment of vapor phase aluminiding, a solid mixture of an aluminum-containing material (preferably aluminum metal, an aluminum alloy such as aluminum-chromium, or an aluminum-containing compound), and a fluoride activator, preferably aluminum fluoride, are placed into a source chamber. Sources of modifying elements may also be provided in the source chamber. Upon heating, an aluminum-containing vapor is formed. Argon gas is flowed through the source chamber, providing a carrier for the gaseous source of aluminum. The gas mixture is flowed over the surface of the article 40, depositing the aluminum thereon. The source and the article 40 are typically heated to a deposition reaction temperature of from about 1800°F to about 2100°F, so that deposited aluminum atoms interdiffuse with the base metal of the article 40 and the precious-metal-containing layer 60, if any. The aluminum-containing layer is preferably from about 0.0005 to about 0.005 inch thick. As an example, a coating of aluminum and the modifying elements about 0.002 inch thick may be deposited in about 4-8 hours using this approach.

The article 40 with the aluminum-containing layer 62 deposited thereon is thereafter heated, step 28 of Figure 1, in an atmosphere comprising at least 5 percent, more preferably at least 50 percent, and most preferably 100 percent by volume hydrogen gas. It is preferred that the atmosphere in the heating step 28 is pure hydrogen, but the hydrogen may be diluted with other gases as indicated. Preferably, in the step of heating 28 the article 40 is heated for a time of from about 1/4 hour to about 8 hours, and to a temperature of from about 1800°F to about 2050°F.

The deposition step 26 results in fluorides being co-deposited in the aluminum-containing layer 62. These fluorides have been identified as being a contributing cause of premature spallation of the final coating. The heating step 28 chemically reacts the deposited fluorides to remove them in gaseous form from the aluminum-containing layer 62 and thence from the protected article.

Optionally but preferably, a ceramic layer 64 is thereafter deposited overlying and contacting the aluminum-containing layer 62, step 30 of Figure 1. (The aluminum-containing layer 62 may have an aluminum oxide scale thereon that is produced by oxidation of the free surface of the interdiffused aluminum-containing layer 62, and the deposition of the ceramic layer 64 "overlying and contacting" the aluminum-containing layer 62 includes deposition onto such an aluminum oxide scale.) The ceramic layer 64 is preferably from about 0.003 to about 0.015 inch thick, most preferably about 0.005 inch thick. (Figure 3 is not drawn to scale.) The ceramic layer 64 is preferably yttria-stabilized zirconia, which is zirconium oxide containing from about 2 to about 12 weight percent, preferably from about 4 to about 8 weight percent, of yttrium oxide. Other operable ceramic materials may be used as well. The ceramic layer 64 may be deposited by any operable technique, such as physical vapor deposition or plasma spray. The substrate and bond coat thereon are typically heated to a temperature of from about 1800°F to about 1900°F during the deposition step 30.

Embodiments of the present invention have been reduced to practice and comparatively tested against the prior approach wherein the article having the aluminum-containing layer thereon is not post-deposition heated in hydrogen. In these studies, the heating step 28 was in 100 percent hydrogen gas for 3 hours at 1925°F. Two hundred airfoils of turbine blades were processed by the present approach. No spallation of the protective coating was observed in these parts in subsequent processing. Over 200 otherwise-identical and identically processed airfoils were maintained as a control group and were not given the hydrogen heat treatment of step 28. About 5-50 percent of the airfoils in the control group exhibited spallation failures in subsequent processing.

Although a particular embodiment of the invention has been described in detail for purposes of illustration, various modifications and enhancements may be made without departing from the spirit and scope of the invention. Accordingly, the invention is not to be limited except as by the appended claims.

| 13DV185408 Parts List | |
|---|---|
| 40 | Article |
| 42 | Gas turbine blade |
| 44 | Airfoil |
| 46 | Shank |
| 48 | Dovetail |
| 50 | Platform |
| 52 | Openings |
| 60 | Precious-metal-coating layer |
| 62 | Aluminum containing layer |
| 64 | Ceramic layer |

## Claims

1. A method for preparing a protected article (40), comprising the steps of furnishing an article (40) to be protected; thereafter
depositing an aluminum-containing layer (62) onto the article (40) from an aluminum vapor source that includes a fluoride; and thereafter
heating the article (40) with the aluminum-containing layer (62) deposited thereon in an atmosphere comprising at least 5 percent by volume hydrogen gas.

2. The method of claim 1, wherein the step of furnishing the article (40) includes the step of
furnishing a component of a gas turbine engine.

3. The method of claim 1 or claim 2, wherein the step of furnishing the article (40) includes the step of
furnishing a component of a gas turbine engine having an airfoil (44), and wherein the step of depositing the aluminum-containing layer (62) includes the step of
depositing the aluminum-containing layer (62) onto the airfoil (44).

4. The method of any preceding claim, wherein the step of depositing the aluminum-containing layer (62) includes the step of
depositing the aluminum-containing layer (62) by vapor-phase aluminiding.

5. The method of any preceding claim, wherein the step of depositing the aluminum-containing layer (62) includes the step of
depositing the aluminum-containing layer (62) from an aluminum-containing vapor.

6. The method of any preceding claim, wherein the step of depositing the aluminum-containing layer (62) includes the step of
depositing the aluminum-containing layer (62) from an aluminum-containing vapor generated by an aluminum source comprising aluminum-containing donor pellets and a fluoride-containing solid.

7. The method of any preceding claim, wherein the step of depositing includes the step of
depositing the aluminum-containing layer (62) from the aluminum vapor source that includes an argon carrier gas.

8. The method of any preceding claim, including an additional step, after the step of furnishing and prior to the step of depositing the aluminum-containing layer (62), of
depositing a precious-metal-containing layer (60) onto the article (40), and wherein the step of depositing the aluminum-containing layer (62) includes the step of
depositing the aluminum-containing layer (62) overlying the precious-metal-containing layer (60).

9. The method of any preceding claim, including an additional step, after the step of furnishing and prior to the step of depositing the aluminum-containing layer (62), of
depositing a platinum-containing layer (60) onto the article (40), and wherein the step of depositing the aluminum-containing layer (62) includes the step of
depositing the aluminum-containing layer (62) overlying the platinum-containing layer (60).

10. The method of any preceding claim, including an additional step, after the step of heating, of depositing a ceramic layer (64) overlying the aluminum-containing layer (62).
